# EUROPÄISCHE PATENTANMELDUNG

(11) **EP 4 092 801 A1**
(43) Veröffentlichungstag der Anmeldung: **23.11.2022**
(21) Anmeldenummer: 21174110.3
(22) Anmeldetag: 17.05.2021
(51) Int. Cl.: H01M 10/42

(54) **STECKVERBINDUNGSEINRICHTUNG ZUM ELEKTRISCHEN VERBINDEN EINES ZELLENMODULS EINER AKKUEINHEIT MIT EINEM ELEKTRONIKMODUL DER AKKUEINHEIT, AKKUEINHEIT UND HANDWERKZEUGMASCHINE**

(71) Anmelder: Hilti Aktiengesellschaft, 9494 Schaan (LI)
(72) Erfinder: Kuhlmann, Kevin, 86916 Kaufering (DE)
(74) Vertreter: Hilti Aktiengesellschaft Corporate Intellectual Property

(57) **Zusammenfassung**

Steckverbindungseinrichtung (140) zum elektrischen Verbinden eines Zellenmoduls (120) einer Akkueinheit (100) mit einem Elektronikmodul (110) der Akkueinheit (100), wobei:
die Steckverbindungseinrichtung (140) ein erstes Verbindungselement (141) mit einem H-förmigen Ausschnitt (148) und ein zweites Verbindungselement (142) aufweist,
das erste Verbindungselement (141) dazu eingerichtet ist, mit einem von dem Elektronikmodul (110) und dem Zellenmodul (120) ausgebildet zu sein, und das zweite Verbindungselement (142) dazu eingerichtet ist, mit dem anderen von dem Elektronikmodul (110) und dem Zellenmodul (120) ausgebildet zu sein,
der H-förmige Ausschnitt (148) zwei parallele Einschnitte (149) und einen die parallelen Einschnitte (149) verbindenden und dazu senkrechten Quereinschnitt (150) aufweist, wodurch zwischen den parallelen Einschnitten (149) zwei von dem Quereinschnitt (150) voneinander getrennte Schenkelabschnitte (151, 152) ausgebildet sind, und
das zweite Verbindungselement (142) zum elektrischen Verbinden mit dem ersten Verbindungselement (141) in den Quereinschnitt (150) des H-förmigen Ausschnitts (148) eingesteckt ist, so dass sich die beiden Schenkelabschnitte (151, 152) in einer Einsteckrichtung (E) ausstellen und das zweite Verbindungselement (142) halten.

## Beschreibung

### GEBIET DER ERFINDUNG

Die vorliegende Erfindung betrifft eine Steckverbindungseinrichtung zum elektrischen Verbinden eines Zellenmoduls einer Akkueinheit mit einem Elektronikmodul der Akkueinheit, eine Akkueinheit mit einer entsprechenden Steckverbindungseinrichtung und eine Handwerkzeugmaschine mit einer entsprechenden Akkueinheit.

Mobile Arbeitsmaschinen, wie beispielsweise Handwerkzeugmaschinen, werden häufig mit Akkueinheiten als Stromquelle betrieben. Die Akkueinheiten umfassen wiederaufladbare galvanische Zellen, welche beim Entladen chemische Energie in elektrische Energie umwandeln. Um den Ladezustand der Zellen zu überwachen, ist es erforderlich, die Spannung der Zellen, insbesondere die Spannung jeder einzelnen Zelle, zu messen. Dazu sind die Zellen elektrisch mit einem Spannungsmesser eines Elektronikmoduls der Akkueinheit verbunden.

Herkömmlich wird die elektrische Verbindung zwischen den Zellen und dem Elektronikmodul zur Spannungsmessung der Zellen beispielsweise mittels Federkontakten oder Lötverbindungen realisiert. Federkontakte bieten den Vorteil einfacher Verbindungen und können insbesondere bei reinen Messleitungen, bei denen kein oder nur ein minimaler Strom übertragen wird, ausreichend sein. Allerdings haben Federkontakte den Nachteil, dass der elektrische Kontakt bei Vibrationen verloren gehen kann, wodurch zum Beispiel eine Spannungsmessung unterbrochen sein kann. Lötverbindungen, die direkt auf eine Platine des Elektronikmoduls gelötet werden, lösen sich dagegen weniger leicht. Allerdings ist eine elektrische Verbindung zwischen den Zellen und dem Elektronikmodul zur Spannungsmessung der Zellen, zum Beispiel jeder einzelnen Zelle, aufwendig. Außerdem kann eine Elektronikeinheit des Elektronikmoduls in diesem Fall nicht in einem Gehäuse vollständig vergossen werden.

Vor diesem Hintergrund besteht die Aufgabe der vorliegenden Erfindung, eine verbesserte Steckverbindungseinrichtung zum elektrischen Verbinden eines Zellenmoduls einer Akkueinheit mit einem Elektronikmodul der Akkueinheit zu schaffen sowie eine Akkueinheit mit einer entsprechenden Steckverbindungseinrichtung und eine Handwerkzeugmaschine mit einer entsprechenden Akkueinheit.

### OFFENBARUNG DER ERFINDUNG

Gemäß einem ersten Aspekt wird eine Steckverbindungseinrichtung zum elektrischen Verbinden eines Zellenmoduls einer Akkueinheit mit einem Elektronikmodul der Akkueinheit vorgeschlagen. Die Steckverbindungseinrichtung weist ein erstes Verbindungselement mit einem H-förmigen Ausschnitt und ein zweites Verbindungselement auf. Das erste Verbindungselement ist dazu eingerichtet, mit einem von dem Elektronikmodul und dem Zellenmodul ausgebildet zu sein, und das zweite Verbindungselement ist dazu eingerichtet, mit dem anderen von dem Elektronikmodul und dem Zellenmodul ausgebildet zu sein. Weiterhin weist der H-förmige Ausschnitt zwei parallele Einschnitte und einen die parallelen Einschnitte verbindenden und dazu senkrechten Quereinschnitt auf, wodurch zwischen den parallelen Einschnitten zwei von dem Quereinschnitt voneinander getrennte Schenkelabschnitte ausgebildet sind. Außerdem ist das zweite Verbindungselement zum elektrischen Verbinden mit dem ersten Verbindungselement in den Quereinschnitt des H-förmigen Ausschnitts eingesteckt, so dass sich die beiden Schenkelabschnitte in einer Einsteckrichtung ausstellen und das zweite Verbindungselement halten.

Mittels der Steckverbindungseinrichtung kann das Zellenmodul der Akkueinheit mit dem Elektronikmodul der Akkueinheit besonders einfach elektrisch verbunden werden. Insbesondere kann die elektrische Verbindung durch einfaches Aufstecken des ersten Verbindungselements auf das zweite Verbindungselement hergestellt werden. Dadurch kann das Zellenmodul mit dem Elektronikmodul mittels der Steckverbindungseinrichtung in einem einzigen Prozessschritt elektrisch verbunden werden.

Außerdem wird das zweite Verbindungselement von den Schenkelabschnitten des ersten Verbindungselements mechanisch gehalten. Insbesondere verhindern die Schenkelabschnitte, dass sich das zweite Verbindungselement entgegen der Einsteckrichtung aus der elektrischen und mechanischen Verbindung mit dem ersten Verbindungselement löst. Dadurch kann vermieden werden, dass die elektrische Verbindung zwischen dem ersten und zweiten Verbindungselement ungewollt unterbrochen wird. Dadurch kann eine Stromübertragung und/oder Signalübertragung über das erste und zweite Verbindungselement zuverlässiger erfolgen.

Insbesondere werden die Schenkelabschnitte des ersten Verbindungselements beim Einstecken des zweiten Verbindungselements in Einsteckrichtung ausgeklappt, so dass das zweite Verbindungselement zwischen den Schenkelabschnitten eingeklemmt wird. Insbesondere besteht im elektrisch verbundenen Zustand zwischen dem ersten und zweiten Verbindungselement ein Formschluss zwischen dem ersten und zweiten Verbindungselement. Insbesondere stellen die Schenkelabschnitte im ausgeklappten Zustand einen Widerhaken dar, der das zweite Verbindungselement davon abhält, sich entgegen der Einsteckrichtung aus der elektrischen und mechanischen Verbindung mit dem ersten Verbindungselement zu lösen.

Beispielsweise dient die elektrische Verbindung des Zellenmoduls mit dem Elektronikmodul mittels der Steckverbindungseinrichtung zur Spannungsmessung des Zellenmoduls, insbesondere zur Spannungsmessung von Einzelzellen des Zellenmoduls.

Das erste und zweite Verbindungselement sind jeweils elektrisch leitend. Insbesondere ist eine Umrandung des H-förmigen Abschnitts des ersten Verbindungselements elektrisch leitend. Insbesondere sind die Schenkelabschnitte des ersten Verbindungselements jeweils elektrisch leitend. Außerdem ist insbesondere ein Abschnitt des zweiten Verbindungselements, welcher in den Quereinschnitt des H-förmigen Abschnitts des ersten Verbindungselements eingesteckt wird, elektrisch leitend.

Der H-förmige Ausschnitt ist insbesondere eine Durchgangsöffnung durch das erste Verbindungselement. Das erste Verbindungselement hat beispielsweise einen plattenartigen Abschnitt, in dem der H-förmige Ausschnitt derart ausgebildet ist, dass er den plattenartigen Abschnitt senkrecht zu einer Haupterstreckungsebene des plattenartigen Abschnitts durchdringt.

Das zweite Verbindungselement weist beispielsweise einen plattenartigen Abschnitt auf, der in einer L-Form gebogen ist. Eine Haupterstreckungsebene des plattenartigen Abschnitts des zweiten Verbindungselements entlang einer langen Seite der L-Form ist beispielweise parallel zu der Haupterstreckungsebene des plattenartigen Abschnitts des ersten Verbindungselements angeordnet. Außerdem ist eine Haupterstreckungsebene des plattenartigen Abschnitts des zweiten Verbindungselements entlang einer kurzen Seite der L-Form beispielsweise senkrecht zu der Haupterstreckungsebene des plattenartigen Abschnitts des ersten Verbindungselements angeordnet.

Das erste Verbindungselement ist dazu eingerichtet, mit einem von dem Elektronikmodul und dem Zellenmodul ausgebildet zu sein. Das heißt beispielsweise, dass das erste Verbindungselement dazu eingerichtet ist, an einem von dem Elektronikmodul und dem Zellenmodul montiert zu werden, so dass es mechanisch und elektrisch damit verbunden ist.

Das zweite Verbindungselement ist dazu eingerichtet, mit dem anderen von dem Elektronikmodul und dem Zellenmodul ausgebildet zu sein. Das heißt beispielsweise, dass das zweite Verbindungselement dazu eingerichtet ist, an dem anderen von dem Elektronikmodul und dem Zellenmodul montiert zu werden, so dass es mechanisch und elektrisch damit verbunden ist.

Die Akkueinheit ist insbesondere zum Betreiben einer Handwerkzeugmaschine eingerichtet, die beispielsweise mit einer Betriebsspannung im Bereich von 9 V - 72 V, bevorzugt zwischen 12 V - 36 V, betrieben wird.

Das Zellenmodul umfasst eine Anordnung mehrerer Einzelzellen, die in dem Zellenmodul fest miteinander verdrahtet sind, um die Ausgangsspannung bereitzustellen. Die Einzelzellen können in dem Zellenmodul in einer elektrischen Reihenschaltung und/oder in einer elektrischen Parallelschaltung miteinander verbunden sein, so dass das Zellenmodul die vorgegebene Ausgangsspannung und eine vorgegebene Ladungskapazität aufweist. Eine elektrische Parallelschaltung eignet sich, um die Kapazität des Zellenmoduls zu erhöhen, ohne dabei die Ausgangsspannung zu erhöhen.

Unter einer Einzelzelle wird insbesondere eine galvanische Zelle verstanden, die genau zwei elektrische Pole bereitstellt. Das heißt, dass eine Einzelzelle insbesondere nicht aus zwei oder mehr Einheiten besteht, die jeweils für sich genommen eine galvanische Zelle bilden.

Die Ausgangspannung wird beispielsweise durch in dem Zellenmodul in Reihe und/oder in einer Parallelschaltung geschaltete Einzelzellen erreicht. Beispielsweise hat eine einzelne Lithium-Ionen-Zelle im vollständig geladenen Zustand eine Ausgangsspannung (Klemmenspannung) von etwa 3,6 V. Werden zwei dieser Zellen in Reihe geschaltet, verdoppelt sich die Ausgangsspannung auf etwa 7,2 V. Außer Lithium-Ionen-Zellen können auch andere galvanische Zellen verwendet werden, wie Nickel-Cadmium, Nickel-Metallhydrid oder auch Bleizellen, wobei diese dann andere Ausgangsspannungen aufweisen können.

Der Halterahmen des Zellenmoduls gibt der Anordnung der Einzelzellen eine mechanische Stabilität. Der Halterahmen des Zellenmoduls ist beispielsweise aus Kunststoff, aus einem Verbundwerkstoff, insbesondere umfassend Kohlefasern, Glasfasern und/oder Aramidfasern, aus Metall und/oder aus einer Kombination der vorgenannten Materialien gefertigt. Der Halterahmen kann beispielsweise Einfassungen für jede der Einzelzellen aufweisen, so dass diese innerhalb des Halterahmens in einem durch die Einfassungen vorbestimmten Abstand zueinander angeordnet sind. Die Einzelzellen können in dem Halterahmen mit einer lösbaren oder nicht lösbaren Verbindung befestigt sein.

Das Elektronikmodul dient zum Überwachen von Zuständen des Zellenmoduls, wie beispielsweise einer Spannung oder einer Temperatur, in Abhängigkeit von erfassten Messwerten, wie beispielsweise Spannungswerten oder Temperaturwerten. Beispielsweise kann durch die Überwachung der Spannung jeder Einzelzelle ein Ladungszustand jeder Einzelzelle überwacht werden.

Beispielsweise sinkt die Ausgangsspannung (Klemmenspannung) einer einzelne Lithium-Ionen-Zelle beim Entladen, so dass über eine Spannungsmessung der einzelnen Lithium-Ionen-Zelle ein Ladezustand dieser Zelle erfasst werden kann.

Das Elektronikmodul kann beispielsweise dazu eingerichtet sein, zu verhindern, dass das Zellenmodul zu stark entladen wird, was die Einzelzellen in dem Zellenmodul beschädigen oder zerstören könnte. Beispielsweise ist das Elektronikmodul dazu eingerichtet, die Einzelzellen vor einer Entladung auf einen Spannungswert unterhalb einer vorgegebenen Minimalspannung zu schützen. Beispielsweise ist das Elektronikmodul dazu eingerichtet, die Einzelzellen vor einer Tiefentladung zu schützen. Beispielsweise ist das Elektronikmodul dazu eingerichtet, eine stark entladene Akkueinheit automatisch in einen Ruhezustand schalten.

Das Elektronikmodul umfasst beispielsweise einen integrierten Schaltkreis, wie einen ASIC (application specific integrated circuit), einen PLC (programmabe logic controller) oder dergleichen. Dieser wird beispielsweise von einer an dem Zellenmodul abgegriffenen Spannung betrieben. Der integrierte Schaltkreis ist beispielsweise dazu eingerichtet, eine aktuelle Spannung des Zellenmoduls, eine aktuelle Ausgangsspannung (Klemmenspannung) des Zellenmoduls, eine aktuelle Einzelzellspannung jeder einzelnen Zelle des Zellenmoduls, eine aktuelle verbleibende Kapazität (Ladezustand) und/oder einen aktuellen Lade- und/oder Entladestrom zu überwachen.

Das Elektronikmodul und das Zellenmodul sind insbesondere mechanisch aneinander befestigt. Beispielsweise umfasst das Elektronikmodul ein Gehäuse und/oder einen Träger. Beispielsweise sind das Elektronikmodul (insbesondere das Gehäuse und/oder der Träger des Elektronikmoduls) und das Zellenmodul (insbesondere der Halterahmen des Zellenmoduls) mittels Rast-, Schnapp-, Steck- und/oder Schraubverbindungen miteinander mechanisch verbunden.

Das Elektronikmodul und das Zellenmodul sind über mindestens eine Steckverbindungseinrichtung gemäß dem ersten Aspekt elektrisch miteinander verbunden. Diese elektrische Verbindung(en) dient/dienen beispielsweise der Spannungsmessung der Einzelzellen.

Neben der elektrischen Verbindung zur Spannungsmessung bestehen zwischen dem Elektronikmodul und dem Zellenmodul weitere elektrische Verbindungen, beispielsweise zur Bereitstellung der Ausgangsspannung der Akkueinheit zur Stromversorgung eines Verbrauchers, wie der Handwerkzeugmaschine. Die weiteren elektrischen Verbindungen können mittels Steckverbindungseinrichtungen gemäß dem ersten Aspekt oder auch herkömmlicher Steckkontakte oder aber auch herkömmlicher Federkontakte realisiert werden.

Die Akkueinheit kann auch zwei oder mehr Zellenmodule umfassen, die jeweils mit dem Elektronikmodul verbunden sind.

In Ausführungsformen ist das Elektronikmodul zum Bereitstellen von elektrischen Kontakten zum elektrischen Verbinden des wenigstens einen Zellenmoduls mit der Handwerkzeugmaschine eingerichtet.

Gemäß einer Ausführungsform der Steckverbindungseinrichtung weist einer der beiden Schenkelabschnitte des ersten Verbindungselements einen Vorsprung in Richtung des anderen der beiden Schenkelabschnitte auf. Außerdem weist das zweite Verbindungselement eine Durchgangsöffnung auf, in die der Vorsprung des ersten Verbindungselements eingreift.

Durch das Eingreifen des Vorsprungs des ersten Verbindungselements in die Durchgangsöffnung des zweiten Verbindungselements kann ein Lösen des zweiten Verbindungselements aus der elektrischen und mechanischen Verbindung mit dem ersten Verbindungselement besser verhindert werden.

Der Vorsprung ist insbesondere an einem den Quereinschnitt des H-förmigen Ausschnitts begrenzenden Rand angeordnet. Der Vorsprung ist insbesondere an einem mittleren Abschnitt des Quereinschnitts angeordnet.

Die Durchgangsöffnung des zweiten Verbindungselements ist insbesondere korrespondierend zu dem Vorsprung angeordnet.

Gemäß einer weiteren Ausführungsform der Steckverbindungseinrichtung weist der andere der beiden Schenkelabschnitte eine zu dem Vorsprung passende Ausnehmung auf.

Dadurch kann der Vorsprung größer ausgebildet werden, ohne den Quereinschnitt im Bereich des Vorsprungs stark einzuengen.

Gemäß einer weiteren Ausführungsform der Steckverbindungseinrichtung hat der Vorsprung eine abgerundete Form.

Beispielsweise hat der Vorsprung in einer Draufsicht auf den H-förmigen Ausschnitt eine Halbkreisform.

Gemäß einer weiteren Ausführungsform der Steckverbindungseinrichtung hat der Vorsprung eine dreieckige Form.

Beispielsweise hat der Vorsprung in einer Draufsicht auf den H-förmigen Ausschnitt eine dreieckige Form, deren eine Dreicksspitze in Richtung des anderen Schenkelabschnitts zeigt.

Gemäß einer weiteren Ausführungsform der Steckverbindungseinrichtung hat der Vorsprung eine Quaderform.

Beispielsweise hat der Vorsprung in einer Draufsicht auf den H-förmigen Ausschnitt eine Quaderform.

Gemäß einer weiteren Ausführungsform der Steckverbindungseinrichtung verjüngt sich das zweite Verbindungselement zu einem freien Ende hin.

Insbesondere weist das zweite Verbindungselement an seinem freien Ende einen sich verjüngenden Abschnitt und/oder keilförmigen Abschnitt auf.

Dadurch, dass sich das zweite Verbindungselement zu seinem freien Ende hin verjüngt, kann das zweite Verbindungselement einfacher in den Quereinschnitt des ersten Verbindungselements eingesteckt werden. Insbesondere können die Schenkelabschnitte beim Einstecken besser in Einsteckrichtung ausgestellt und das zweite Verbindungselement besser von den Schenkelabschnitten verkeilt werden.

Gemäß einem zweiten Aspekt wird eine Akkueinheit für eine Handwerkzeugmaschine vorgeschlagen. Die Akkueinheit weist ein Zellenmodul mit einem Halterahmen und mehreren von dem Halterahmen gehaltenen Einzelzellen auf, wobei die Einzelzellen zum Bereitstellen einer vorgegebenen Ausgangsspannung elektrisch miteinander verbunden sind. Zudem weist die Akkueinheit ein Elektronikmodul mit mindestens einem Spannungsmesser zum Erfassen mindestens eines Spannungswertes des Zellenmoduls auf, wobei das Elektronikmodul zum Überwachen einer Spannung des Zellenmoduls in Abhängigkeit des erfassten mindestens einen Spannungswertes eingerichtet ist. Außerdem weist die Akkueinheit mindestens eine Steckverbindungseinrichtung gemäß dem ersten Aspekt zum Verbinden des mindestens einen Spannungsmessers mit dem Zellenmodul auf. Dabei weist eines von dem Elektronikmodul und dem Zellenmodul ein erstes Verbindungselement der Steckverbindungseinrichtung auf, und das andere von dem Elektronikmodul und dem Zellenmodul weist ein zweites Verbindungselement der Steckverbindungseinrichtung auf.

Gemäß einer weiteren Ausführungsform der Akkueinheit ist das Elektronikmodul dazu eingerichtet, die Spannung von jeder Einzelzelle des Zellenmoduls zu überwachen. Weiterhin ist jede Einzelzelle oder jede Gruppe von ausschließlich parallelgeschalteten Einzelzellen mittels mindestens einer Steckverbindungseinrichtung mit dem Elektronikmodul zur Spannungsmessung elektrisch verbunden.

Gemäß einem dritten Aspekt wird eine Handwerkzeugmaschine mit einer Akkueinheit gemäß dem zweiten Aspekt vorgeschlagen.

Die Handwerkzeugmaschine ist beispielsweise als eine Bohrmaschine, ein Schlagbohrer, ein Bohrhammer, eine Handkreissäge, eine Stichsäge, eine Fuchsschwanzsäge, ein Trennschleifer, ein Rührwerk oder als eine andere mobile Arbeitsmaschine ausgebildet.

Die Akkueinheit ist insbesondere wie anhand des zweiten Aspekts beschrieben ausgebildet.

Die nachfolgende Beschreibung erläutert die Erfindung anhand von exemplarischen Ausführungsformen und Figuren. In den Figuren zeigt:
- Fig. 1: eine schematische Ansicht einer Handwerkzeugmaschine gemäß einer Ausführungsform;
- Fig. 2: eine schematische Ansicht einer Akkueinheit der Handwerkzeugmaschine aus Fig. 1;
- Fig. 3: eine schematische Ansicht einer Steckverbindungseinrichtung der Akkueinheit aus Fig. 2;
- Fig. 4: ein zweites Verbindungselement der Steckverbindungseinrichtung aus Fig. 3 gemäß einer weiteren Ausführungsform;
- Fig. 5: eine Draufsicht auf ein erstes Verbindungselement der Steckverbindungseinrichtung aus Fig. 3;
- Fig. 6: eine Seitenansicht der Steckverbindungseinrichtung aus Fig. 3;
- Fig. 7: eine Draufsicht auf ein erstes Verbindungselement der Steckverbindungseinrichtung aus Fig. 3 gemäß einer weiteren Ausführungsform;
- Fig. 8: eine Seitenansicht eines zweiten Verbindungselements der Steckverbindungseinrichtung aus Fig. 3 gemäß einer weiteren Ausführungsform;
- Fig. 9: eine Draufsicht auf ein erstes Verbindungselement der Steckverbindungseinrichtung aus Fig. 3 gemäß einer weiteren Ausführungsform; und
- Fig. 10: eine Draufsicht auf ein erstes Verbindungselement der Steckverbindungseinrichtung aus Fig. 3 gemäß einer weiteren Ausführungsform.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

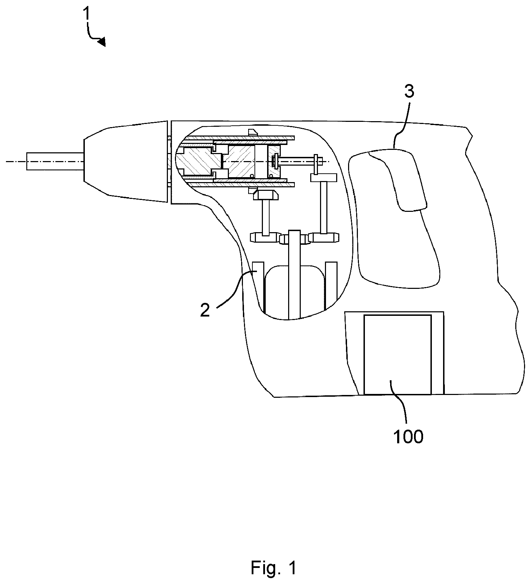

Fig. 1 zeigt eine schematische Ansicht einer akkubetriebenen Handwerkzeugmaschine 1. Es handelt sich beispielsweise um einen Bohrhammer. Der Bohrhammer 1 weist einen Elektromotor 2 auf, der von einer Akkueinheit 100 mit Strom versorgt wird. Ein Hauptschalter 3 kontrolliert dabei beispielsweise die Leistung, die der Akkueinheit 100 entnommen wird.

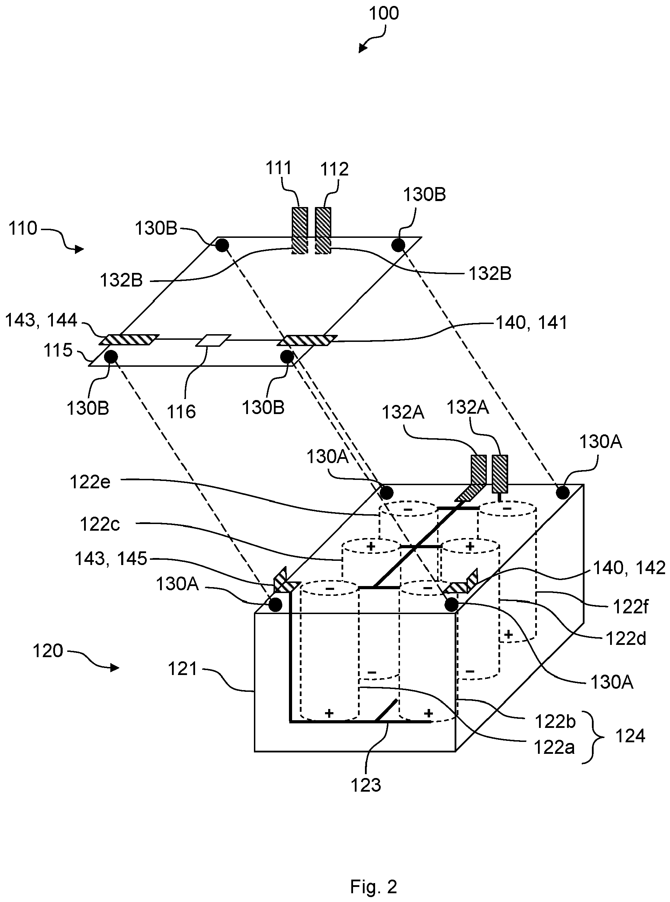

Fig. 2 zeigt eine schematische Ansicht der Akkueinheit 100 der in Fig. 1 gezeigten Handwerkzeugmaschine 1. Die Akkueinheit 100 kann anstatt in dem in Fig. 1 gezeigten Bohrhammer auch für andere Handwerkzeugmaschinen eingesetzt werden. Die Akkueinheit 100 kann aber auch für andere akkubetriebene Maschinen und/oder akkubetriebene Fahrzeuge eingesetzt werden.

Die Akkueinheit 100 umfasst ein Elektronikmodul 110 und ein Zellenmodul 120. Das Zellenmodul 120 umfasst einen Halterahmen 121, welcher zum Halten mehrerer Einzelzellen 122 eingerichtet ist. In Fig. 1 sind beispielhaft sechs Einzelzellen 122 gezeigt und mit den Bezugszeichen 122 a - f gekennzeichnet. Die in dem Halterahmen 121 angeordneten Einzelzellen 122 sind über elektrische Verbindungen 123 fest miteinander verdrahtet, so dass das Zellenmodul 120 eine bestimmte Ausgangsspannung und eine bestimmte Gesamtkapazität aufweist. Die Ausgangsspannung und die Gesamtkapazität ergibt sich in Abhängigkeit der Art der Einzelzellen 122, insbesondere deren Einzelzellspannung sowie deren einzelnen Kapazitäten, und der Art der Verdrahtung der Einzelzellen 122 in dem Halterahmen 121. Die elektrischen Verbindungen 123 zwischen den Einzelzellen 122 können in den Halterahmen 121 integriert sein, beispielsweise in Form von Halteblechen, oder aber separat von dem Halterahmen, beispielsweise in Form von einzelnen Drähten oder Kabelstücken, ausgebildet sein. Bei einer elektrischen Reihenschaltung der Einzelzellen 122 entspricht die Ausgangsspannung der Summe der Einzelzellspannungen. Bei einer elektrischen Parallelschaltung entspricht die Gesamtkapazität der Summe der Einzelzellkapazitäten. Die Einzelzellen 122 können in dem Zellenmodul 120 beispielsweise auch in Gruppen parallelgeschaltet und die Gruppen in Reihe geschaltet vorliegen.

In dem in Fig. 2 gezeigten Beispiel sind jeweils zwei der sechs dargestellten Einzelzellen 122 zueinander parallelgeschaltet und sind diese drei Parallelschaltungen miteinander in Reihe geschaltet. Die Einzelzellen 122 können aber auch anders miteinander verschaltet sein.

Das Zellenmodul 120 weist (z. B. lösbare) mechanische Verbinder 130A und (z. B. lösbare) elektrische Verbinder 132A auf. Beispielsweise handelt es sich bei den mechanischen Verbindern 130A um Gewinde, die zum Einschrauben einer entsprechenden Schraube geeignet sind, und bei den elektrischen Verbindern 132A um Steckkontakte, die mit korrespondierenden Buchsen verbindbar sind.

Das Elektronikmodul 110 weist zu den mechanischen 130A und elektrischen 132A Verbindern des Zellenmoduls 120 korrespondierende Verbinder 130B, 132B auf. In diesem Beispiel sind dies beispielsweise Schrauben 130B und Buchsen 132B.

Das Elektronikmodul 110 dient zum Überwachen von Zuständen des Zellenmoduls 120, wie beispielsweise der Spannung des Zellenmoduls 120, insbesondere der Spannung jeder Einzelzelle 122. Das Elektronikmodul 110 kann auch beispielsweise zum Überwachen der Temperatur des Zellenmoduls 120 dienen. Das Elektronikmodul 110 weist beispielsweise einen integrierten Schaltkreis (nicht gezeigt) und ein Gehäuse, einen Träger oder dergleichen (Bezugszeichen 115 in Fig. 2) auf. Die mechanischen Verbinder 130B sind insbesondere an dem Gehäuse/Träger 115 angebracht.

Das Elektronikmodul 110 umfasst in diesem Beispiel weiterhin zwei elektrische Kontakte 111, 112 zum Kontaktieren von korrespondierenden elektrischen Kontakten (nicht gezeigt) der Handwerkzeugmaschine 1 (Fig. 1). An den Kontakten 111, 112 wird insbesondere die Ausgangsspannung des Zellenmoduls 120 bereitgestellt. Ein Strom zum Antreiben eines Elektromotors 2 (Fig. 1) der Handwerkzeugmaschine 1 fließt in diesem Beispiel von den elektrischen Verbindern 132A über die elektrischen Verbinder 132B und die Kontakte 111, 112 zu dem Elektromotor 2.

Die Akkueinheit 100 ist nicht auf nur ein Zellenmodul 120 beschränkt, sondern kann auch mehrere mit dem Elektronikmodul 110 verbundene Zellenmodule ähnlich dem Zellenmodul 120 aufweisen.

Das Elektronikmodul 110 ist zum Überwachen einer Spannung des Zellenmoduls 120 in Abhängigkeit wenigstens eines Spannungswertes eingerichtet. Hierzu umfasst das Elektronikmodul 110 insbesondere mindestens einen Spannungsmesser 116 zum Erfassen einer Spannung des Zellenmoduls 120. In Fig. 2 ist beispielhaft ein Spannungsmesser 116 eingezeichnet. Das Elektronikmodul 110 kann jedoch mehrere Spannungsmesser 116 aufweisen. Beispielsweise kann das Elektronikmodul 110 je einen Spannungsmesser 116 für jede der Einzelzellen 122 a - f aufweisen, so dass die Spannung jeder Einzelzelle 122 a - f separat gemessen werden kann. Das Elektronikmodul 110 kann auch je einen Spannungsmesser 116 für je eine Gruppe 124 von zueinander parallelgeschalteten Einzelzellen 122 aufweisen. In Fig. 2 sind die Einzelzellen 122a und 122b zueinander parallelgeschaltet. Die Spannung der Parallelschaltung der Gruppe 124, und somit die Spannung jeder der Einzelzellen 122a und 122b, wird mit Hilfe des Spannungsmessers 116 gemessen.

Auf ähnliche Weise sind beispielweise die Einzelzellen 122c und 122d zueinander parallelgeschaltet und wird ihre Spannung mit Hilfe eines weiteren (nicht gezeigtem) Spannungsmessers, ähnlich dem Spannungsmesser 116, gemessen und von dem Elektronikmodul 110 überwacht. Auch die Einzelzellen 122e und 122f sind beispielsweise zueinander parallelgeschaltet und ihre Spannung wird mit Hilfe eines weiteren (nicht gezeigtem) Spannungsmessers, ähnlich dem Spannungsmesser 116, gemessen und von dem Elektronikmodul 110 überwacht.

Zum elektrischen Verbinden des mindestens einen Spannungsmessers 116 des Elektronikmoduls 110 mit dem Zellenmodul 120, insbesondere mit einer Einzelzelle 122 des Zellenmoduls oder einer Gruppe 124 von Einzelzellen 122a, 122b des Zellenmoduls 120, weist die Akkueinheit 100 mindestens eine Steckverbindungseinrichtung 140 auf. Die Steckverbindungseinrichtung 140 weist ein erstes Verbindungselement 141 auf, welches an dem Elektronikmodul 110 angeordnet und befestigt ist. Außerdem weist die Steckverbindungseinrichtung 140 ein zweites Verbindungselement 142 auf, welches an dem Zellenmodul 120 angeordnet und befestigt ist. Das erste und zweite Verbindungselement 141, 142 sind jeweils elektrisch leitend. Durch Zusammenstecken des in Fig. 2 gezeigten ersten und zweiten Verbindungselements 141, 142 wird eine elektrische Verbindung zwischen den Einzelzellen 122a, 122b (Parallelschaltung 124) und dem Spannungsmesser 116 hergestellt.

In dem in Fig. 2 gezeigten Beispiel sind zwei Steckverbindungseinrichtungen 140, 143 zum elektrischen Verbinden des Spannungsmessers 116 mit der Gruppe 124 von Einzelzellen 122a, 122b gezeigt. Die Steckverbindungseinrichtung 143 weist analog zur Steckverbindungseinrichtung 140 ein erstes an dem Elektronikmodul 110 angeordnetes Verbindungselement 144 und ein zweites an den Einzelzellen 122a, 122b (Parallelschaltung 124) angeordnetes Verbindungselement 145 auf.

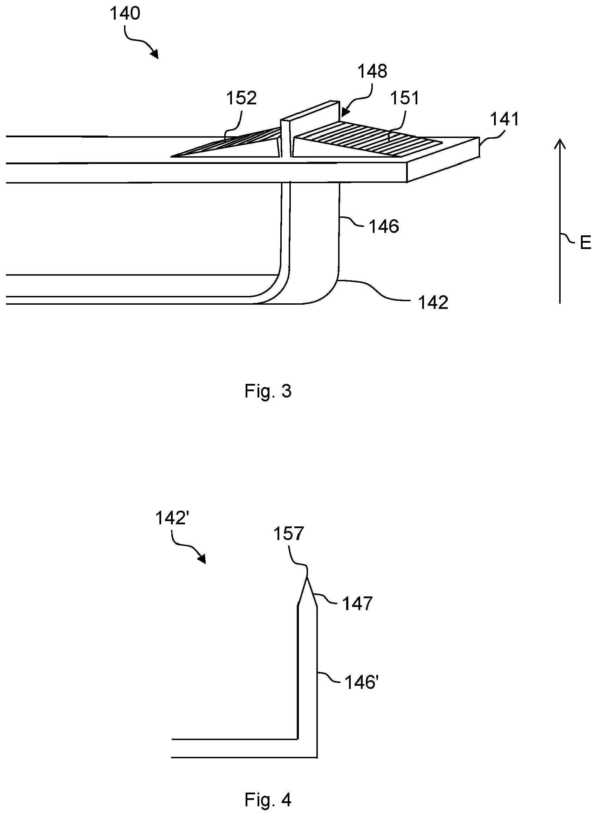

Fig. 3 zeigt die Steckverbindungseinrichtung 140 im elektrisch und mechanisch verbundenen Zustand. Das zweite Verbindungselement 142 ist in diesem Beispiel ein L-förmiges, elektrisch leitendes Element, welches einen in Fig. 3 nach oben gerichteten Abschnitt 146 aufweist. Der Abschnitt 146 steht insbesondere von dem Zellenmodul 120 (Fig. 2) in Richtung des Elektronikmoduls 110 vor. Der Abschnitt 146 ist insbesondere elektrisch leitend. Der Abschnitt 146 ist beispielsweise ein sogenanntes Kontaktmesser.

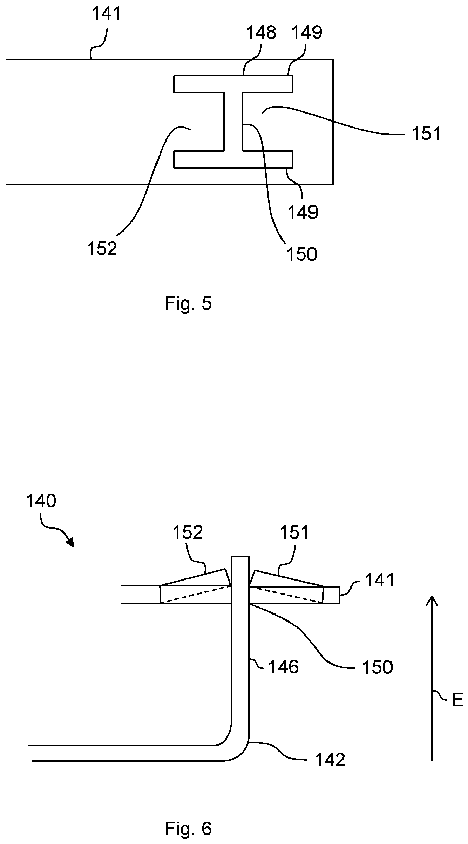

Wie in Fig. 4 gezeigt, kann der Abschnitt 146' des zweiten Verbindungselements 142' in Ausführungsformen an einem freien Ende 157 einen sich verjüngenden Abschnitt 147 zum besseren Einführen des Abschnitts 146' in eine Öffnung 150 (Fig. 5) des ersten Verbindungselements 141 aufweisen. Man kann auch sagen, der Abschnitt 147 ist ein keilförmiger Abschnitt 147.

Das erste Verbindungselement 141 weist einen H-förmigen Ausschnitt 148 (Fig. 3) auf. Fig. 5 zeigt eine Draufsicht auf das erste Verbindungselement 141, in der der H-förmige Ausschnitt 148 zu sehen ist. Der H-förmige Ausschnitt 148 weist zwei parallele Einschnitte 149 und einen die parallelen Einschnitte 149 verbindenden und dazu senkrechten Quereinschnitt 150 auf. Durch die parallelen Einschnitte 149 und den Quereinschnitt 150 sind in dem ersten Verbindungselement 141 zwei Schenkelabschnitte 151, 152 ausgebildet. Insbesondere sind die zwei Schenkelabschnitte 151, 152 zwischen den parallelen Einschnitten 149 ausgebildet und werden durch den Quereinschnitt 150 voneinander getrennt.

Zum elektrischen Verbinden des ersten und zweiten Verbindungselements 141, 142 wird das zweite Verbindungselement 142, insbesondere der hervorstehende Abschnitt 146 des zweiten Verbindungselements 142, in den Quereinschnitt 150 des H-förmigen Ausschnitts 148 eingesteckt. Durch Einstecken des Abschnitts 146 des zweiten Verbindungselements 142 in den Quereinschnitt 150 des H-förmigen Ausschnitts 148 des ersten Verbindungselements 141 in einer Einsteckrichtung E (Fig. 3), stellen sich die beiden Schenkelabschnitte151, 152 des ersten Verbindungselements 141 in der Einsteckrichtung E aus. Fig. 6 zeigt zur Veranschaulichung eine Seitenansicht der Steckverbindungseinrichtung 140 aus Fig. 3. Wie in den Figuren 3 und 6 zu sehen, werden die beiden Schenkelabschnitte 151, 152 durch das Einschieben des Abschnitts 146 in den Quereinschnitt 150 ein Stück in der Einsteckrichtung E mitbewegt, so dass sie sich aufstellen und bis sie den Abschnitt 146 verkeilen und gemäß einem Widerhaken mechanisch halten. Dadurch ist eine elektrische Verbindung zwischen den Schenkelabschnitten 151, 152 des ersten Verbindungselements 141 und dem Abschnitt 146 des zweiten Verbindungselements 142 hergestellt, die auch durch Vibrationen oder dergleichen nicht so einfach gelöst werden kann. Folglich ist über die Steckverbindungseinrichtung 140 eine stabile elektrische Verbindung zwischen dem Elektronikmodul 110 und dem Zellenmodul 120 geschaffen.

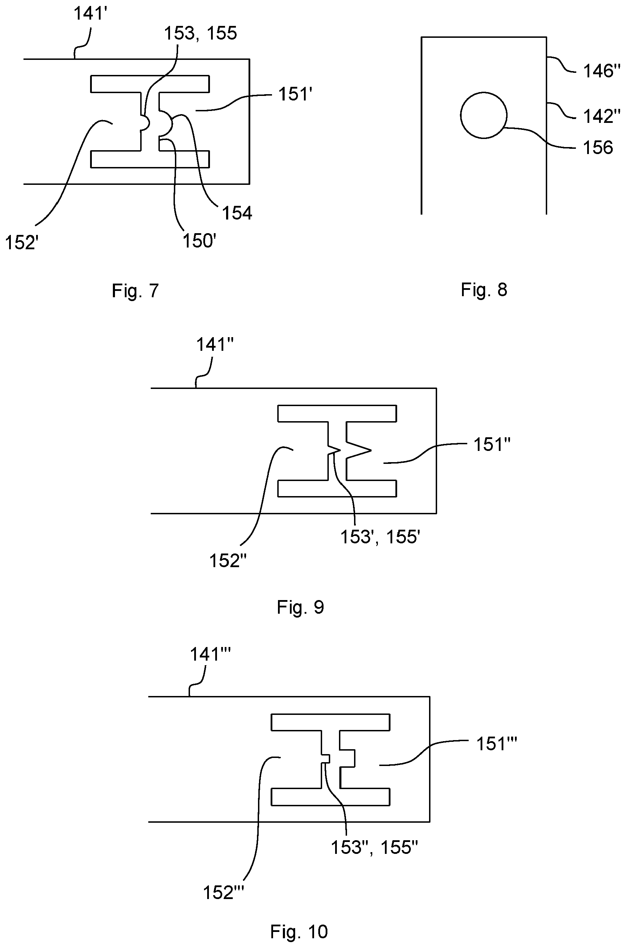

Fig. 7 veranschaulicht eine weitere Ausführungsform des ersten Verbindungselements 141' der Steckverbindungseinrichtung 140 aus Fig. 3. In dieser Ausführungsform weist der Schenkelabschnitt 152' des ersten Verbindungselements 141' einen Vorsprung 153 auf, der in Richtung des zweiten Schenkels 151' zeigt. Außerdem weist der zweite Schenkelabschnitt 151' eine Ausnehmung 154 auf, welche zu dem Vorsprung 153 korrespondiert.

Der Vorsprung 153 ist dafür eingerichtet, bei dem Einschieben des Abschnitts 146" (Fig. 8) des zweiten Verbindungselements 142" in den Quereinschnitt 150' (Fig. 7) des ersten Verbindungselements 141' in eine Durchgangsöffnung 156 (Fig. 8) des zweiten Verbindungselements 142" einzugreifen. Durch das Eingreifen des Vorsprungs 153 in die Öffnung 156 ist eine noch sicherere elektrische und mechanische Verbindung des ersten Verbindungselements 141' mit dem zweiten Verbindungselement 142" möglich.

In dem in Fig. 7 gezeigten Beispiel hat der Vorsprung 153 eine abgerundete Form 155, insbesondere in der Draufsicht eine Halbkreisform 155. Die Figuren 9 und 10 zeigen weitere Varianten eines Vorsprungs 153', 153" eines ersten Verbindungselements 141", 141''' der Steckverbindungseinrichtung 140 aus Fig. 3. In der Variante von Fig. 9 hat der Vorsprung 153' eine dreieckige Form 155'. In der Variante von Fig. 10 hat der Vorsprung 153" eine Quaderform 155".

### BEZUGSZEICHENLISTE

- 1: Handwerkzeugmaschine
- 2: Elektromotor
- 3: Schalter
- 100: Akkueinheit
- 110: Elektronikmodul
- 111: elektrischer Kontakt
- 112: elektrischer Kontakt
- 115: Gehäuse/Träger
- 116: Spannungsmesser
- 120: Zellenmodul
- 121: Halterahmen
- 122: Einzelzelle
- 122a-f: Einzelzelle
- 123: elektrische Verbindung
- 124: Gruppe (Parallelschaltung)
- 130A: mechanische Verbindung
- 130B: mechanische Verbindung
- 132A: elektrische Verbindung
- 132B: elektrische Verbindung
- 140: Steckverbindungseinrichtung
- 141: erstes Verbindungselement
- 141': erstes Verbindungselement
- 141": erstes Verbindungselement
- 141''': erstes Verbindungselement
- 142: zweites Verbindungselement
- 142': zweites Verbindungselement
- 142": zweites Verbindungselement
- 143: Steckverbindungseinrichtung
- 144: erstes Verbindungselement
- 145: zweites Verbindungselement
- 146: vorstehender Abschnitt
- 147: sich verjüngender Abschnitt
- 148: H-förmiger Ausschnitt
- 149: Einschnitt
- 150: Quereinschnitt
- 151: Schenkelabschnitt
- 151': Schenkelabschnitt
- 151": Schenkelabschnitt
- 151''': Schenkelabschnitt
- 152: Schenkelabschnitt
- 152': Schenkelabschnitt
- 152": Schenkelabschnitt
- 152''': Schenkelabschnitt
- 153: Vorsprung
- 153': Vorsprung
- 153": Vorsprung
- 154: Ausnehmung
- 155: abgerundete Form
- 155': dreieckige Form
- 155": Quaderform
- 156: Durchgangsöffnung
- 157: freies Ende

- E: Einsteckrichtung

## Patentansprüche

1. Steckverbindungseinrichtung (140) zum elektrischen Verbinden eines Zellenmoduls (120) einer Akkueinheit (100) mit einem Elektronikmodul (110) der Akkueinheit (100), wobei:
die Steckverbindungseinrichtung (140) ein erstes Verbindungselement (141) mit einem H-förmigen Ausschnitt (148) und ein zweites Verbindungselement (142) aufweist,
das erste Verbindungselement (141) dazu eingerichtet ist, mit einem von dem Elektronikmodul (110) und dem Zellenmodul (120) ausgebildet zu sein, und das zweite Verbindungselement (142) dazu eingerichtet ist, mit dem anderen von dem Elektronikmodul (110) und dem Zellenmodul (120) ausgebildet zu sein,
der H-förmige Ausschnitt (148) zwei parallele Einschnitte (149) und einen die parallelen Einschnitte (149) verbindenden und dazu senkrechten Quereinschnitt (150) aufweist, wodurch zwischen den parallelen Einschnitten (149) zwei von dem Quereinschnitt (150) voneinander getrennte Schenkelabschnitte (151, 152) ausgebildet sind, und
das zweite Verbindungselement (142) zum elektrischen Verbinden mit dem ersten Verbindungselement (141) in den Quereinschnitt (150) des H-förmigen Ausschnitts (148) eingesteckt ist, so dass sich die beiden Schenkelabschnitte (151, 152) in einer Einsteckrichtung (E) ausstellen und das zweite Verbindungselement (142) halten.

2. Steckverbindungseinrichtung nach Anspruch 1, **dadurch gekennzeichnet, dass** einer der beiden Schenkelabschnitte (151', 152') des ersten Verbindungselements (141') einen Vorsprung (153) in Richtung des anderen der beiden Schenkelabschnitte (151', 152') aufweist, und das zweite Verbindungselement (142") eine Durchgangsöffnung (156) aufweist, in die der Vorsprung (153) des ersten Verbindungselements (141') eingreift.

3. Steckverbindungseinrichtung nach Anspruch 2, **dadurch gekennzeichnet, dass** der andere der beiden Schenkelabschnitte (151', 152') eine zu dem Vorsprung (153) passende Ausnehmung (154) aufweist.

4. Steckverbindungseinrichtung nach Anspruch 2 oder 3, **dadurch gekennzeichnet, dass** der Vorsprung (153) eine abgerundete Form (155) hat.

5. Steckverbindungseinrichtung nach Anspruch 2 oder 3, **dadurch gekennzeichnet, dass** der Vorsprung (153') eine dreieckige Form (155') hat.

6. Steckverbindungseinrichtung nach Anspruch 2 oder 3, **dadurch gekennzeichnet, dass** der Vorsprung (153") eine Quaderform (155") hat.

7. Steckverbindungseinrichtung nach einem der Ansprüche 1 - 6, **dadurch gekennzeichnet, dass** sich das zweite Verbindungselement (142') zu einem freien Ende (157) hin verjüngt (147).

8. Akkueinheit (100) für eine Handwerkzeugmaschine (1), aufweisend:
ein Zellenmodul (120) mit einem Halterahmen (121) und mehreren von dem Halterahmen (121) gehaltenen Einzelzellen (122), wobei die Einzelzellen (122) zum Bereitstellen einer vorgegebenen Ausgangsspannung elektrisch miteinander verbunden (123) sind,
ein Elektronikmodul (110) mit mindestens einem Spannungsmesser (116) zum Erfassen mindestens eines Spannungswertes des Zellenmoduls (120), wobei das Elektronikmodul (110) zum Überwachen einer Spannung des Zellenmoduls (120) in Abhängigkeit des erfassten mindestens einen Spannungswertes eingerichtet ist, und
mindestens eine Steckverbindungseinrichtung (140) gemäß einem der Ansprüche 1 - 7 zum Verbinden des mindestens einen Spannungsmessers (116) mit dem Zellenmodul (120),
wobei eines von dem Elektronikmodul (110) und dem Zellenmodul (120) ein erstes Verbindungselement (141) der Steckverbindungseinrichtung (140) aufweist, und das andere von dem Elektronikmodul (110) und dem Zellenmodul (120) ein zweites Verbindungselement (142) der Steckverbindungseinrichtung (140) aufweist.

9. Akkueinheit nach Anspruch 8, **dadurch gekennzeichnet, dass** das Elektronikmodul (110) dazu eingerichtet ist, die Spannung von jeder Einzelzelle (122) des Zellenmoduls (120) zu überwachen, und jede Einzelzelle (122) oder jede Gruppe (124) von ausschließlich parallelgeschalteten Einzelzellen (122) mittels mindestens einer Steckverbindungseinrichtung (140) mit dem Elektronikmodul (110) zur Spannungsmessung elektrisch verbunden ist.

10. Handwerkzeugmaschine (1) mit einer Akkueinheit (100) nach Anspruch 8 oder 9.
